(19) Europäisches Patentamt
European Patent Office
Office européen des brevets

(11) Veröffentlichungsnummer: **0 433 990 B1**

(12) # EUROPÄISCHE PATENTSCHRIFT

(45) Veröffentlichungstag der Patentschrift: **19.04.95**

(51) Int. Cl.[6]: **C08F 297/08**, C08F 4/602

(21) Anmeldenummer: **90124595.1**

(22) Anmeldetag: **18.12.90**

Die Akte enthält technische Angaben, die nach dem Eingang der Anmeldung eingereicht wurden und die nicht in dieser Patentschrift enthalten sind.

(54) **Verfahren zur Herstellung einer Polypropylen-Formmasse.**

(30) Priorität: **21.12.89 DE 3942364**

(43) Veröffentlichungstag der Anmeldung:
**26.06.91 Patentblatt 91/26**

(45) Bekanntmachung des Hinweises auf die Patenterteilung:
**19.04.95 Patentblatt 95/16**

(84) Benannte Vertragsstaaten:
**BE DE ES FR GB IT NL**

(56) Entgegenhaltungen:
**EP-A- 0 135 834**
**EP-A- 0 298 453**
**EP-A- 0 344 887**
**EP-A- 0 405 201**

(73) Patentinhaber: **HOECHST AKTIENGESELLSCHAFT**

**D-65926 Frankfurt (DE)**

(72) Erfinder: **Schreck, Michael, Dr.**
**Rauenthaler Weg 32**
**W-6000 Frankfurt am Main (DE)**
Erfinder: **Winter, Andreas, Dr.**
**Taunusblick 10**
**W-6246 Glashütten ) (DE)**
Erfinder: **Spaleck, Walter, Dr.**
**Sulzbacher Strasse 63**
**W-6237 Liederbach (DE)**
Erfinder: **Kondoch, Hartmut, Dr.**
**Loreleistrasse 101**
**W-6230 Frankfurt am Main (DE)**
Erfinder: **Rohrmann, Jürgen, Dr.**
**Die Ritterwiesen 10**
**W-6237 Liederbach (DE)**

EP 0 433 990 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung bezieht sich auf ein Verfahren zur Herstellung einer Polypropylen-Formmasse, wobei in der ersten Stufe ein überwiegend kristallines, isotaktisches Propylenhomo- oder -copolymer und in der zweiten Stufe ein statistisches Copolymer von Propylen mit Ethylen und gegebenenfalls einem zweiten 1-Olefin sowie ein teilweise kristallines Polymer des zweiten 1-Olefins erzeugt wird.

In EP-A-405 201 wird eine syndiotaktische Polypropylen-Formmasse beschrieben. In EP-A-344 887 wird eine silizium Verbrüchte Übergangsmetallverbindung zur polymerisation von alpha-Olefinen beschrieben.

Isotaktisches Polypropylen kann zu Formkörpern verarbeitet werden, die vorteilhafte mechanische Eigenschaften aufweisen, vor allem hohe Härte, Steifigkeit sowie Formbeständigkeit auch bei höheren Temperaturen. Für viele Anwendungen wirkt sich auch die gute Spannungsrißbeständigkeit günstig aus. Nachteilig ist dagegen die hohe, oberhalb von 0 °C liegende Einfriertemperatur der amorphen Bestandteile des Polypropylens. Sie bewirkt ein starkes Absinken von Schlagfestigkeit, Reiß- und Biegefestigkeit der aus isotaktischem Polypropylen hergestellten Gegenstände mit sinkender Temperatur, insbesondere unterhalb von 0 °C.

Es ist daher zweckmäßig, isotaktischem PP eine Komponente zuzufügen, deren Einfriertemperatur unterhalb der später zu erwartenden Gebrauchstemperaturen bis hinunter zu -40 °C liegt. Dies versucht man zu erreichen durch Zusatz von Komponenten mit möglichst tiefer Einfriertemperatur, wobei vor allem Ethylen-Propylen-Copolymere oder Polyethylen sowie Kombinationen davon dem Polypropylen zugesetzt werden. Derartige Mischungen lassen sich herstellen durch Zusammenbringen der Einzelbestandteile in Walzwerken, Knetern oder Extrudern.

Sie entstehen aber auch bei verschiedenen Methoden der Blockcopolymerisation mit Ziegler-Natta-Katalysatoren.

Diese Verfahren der Blockcopolymerisation sind besonders vorteilhaft, weil die Polymermischung mit verbesserter Schlagfestigkeit und Zähigkeit in Pulverform anfällt und das Granulieren vor ihrer Weiterverarbeitung unter Umständen vermieden werden kann.

Es ist bekannt, mit Hilfe von Ziegler-Natta-Katalysatoren in einer mehrstufigen Polymerisation ein Polymer mit verbesserter Schlaggzähigkeit, insbesondere bei niedrigen Temperaturen, herzustellen, wobei die Härte des Polypropylens weitgehend erhalten bleibt. Polymere dieses Typs sind eine innige Mischung der verschiedenen Komponenten und werden allgemein Blockcopolymere genannt.

Die Herstellung solcher Blockcopolymere mit Hilfe von Ziegler-Katalysatoren auf $MgCl_2$-Trägerbasis ist bekannt (vgl. US-A-4,576,994, EP-A-135 834).

Ziel ist die Erzeugung eines Copolymeren in der zweiten Stufe, wobei der Einfrierbereich der nicht kristallinen Anteile dieser Copolymeren möglichst tief liegen und innerhalb eines engen Bereiches erfolgen sollte, da dies eine ausgezeichnete Schlagzähigkeit schon bei tiefen Temperaturen erwarten läßt.

Es wurde nun gefunden, daß Blockcopolymere mit ausgezeichneter Fließfähigkeit, deren amorphe Anteile erst bei sehr tiefen Temperaturen und innerhalb eines engen Temperaturintervalls einfrieren, besonders vorteilhaft hergestellt werden können, wenn man zu ihrer Herstellung ein Metallocen-Katalysatorsystem verwendet.

Die Erfindung betrifft somit ein Verfahren zur Herstellung einer Polypropylen-Formmasse, bestehend aus

(1) 20 bis 99 Gew.-% eines kristallinen, isotaktischen Polymers, welches zu mindestens 95 Gew.-% aus polymerisiertem Propylen besteht,

(2) 1 bis 80 Gew.-% eines nicht kristallinen Ethylen-Propylen-Copolymeren mit einem Ethylengehalt von 20 bis 90 Gew.-%,

wobei man zunächst in einer oder mehreren Stufen in flüssigem Propylen bei einer Verweilzeit von 15 bis 400 Minuten, einem Druck von 5 bis 100 bar und einer Temperatur von 0 bis 100 °C das Polymer (1) und in einer zweiten Stufe bei einer Verweilzeit von 10 bis 180 Minuten, einem Druck von 5 bis 100 bar und einer Temperatur von 0 bis 100 °C in Gegenwart von Ethylen in der Gasphase das Polymer (2) herstellt, in Gegenwart eines Katalysators, welcher aus einer Übergangsmetallverbindung und einer aluminiumorganischen Verbindung besteht, dadurch gekennzeichnet, daß die Polymerisation in der zweiten Stufe in der Gasphase stattfindet und daß die Übergangsmetallverbindung ein Metallocen der Formel I

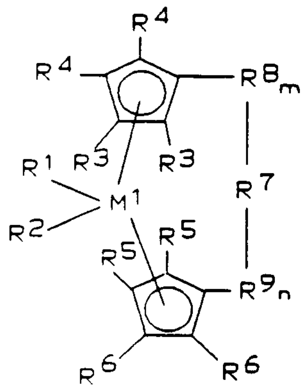

(I)

ist, worin

$M^1$ ein Metall der Gruppe IVb, Vb oder VIb des Periodensystems ist,

$R^1$ und $R^2$ gleich oder verschieden sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten,

$R^3$, $R^4$, $R^5$ und $R^6$ gleich oder verschieden sind und ein Wasserstoffatom, ein Halogenatom, eine $C_1$-$C_{10}$-Alkylgruppe, $-NR^{10}_2$, $-SR^{10}$, $-OSiR^{10}_3$, $-SiR^{10}_3$ oder $PR^{10}_2$, worin $R^{10}$ ein Halogenatom oder eine $C_1$-$C_{10}$-Alkylgruppe ist, bedeuten, oder je zwei benachbarte $R^3$, $R^4$, $R^5$ oder $R^6$ mit den sie verbindenden C-Atomen einen Ring bilden,

$R^7$

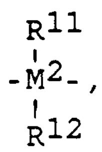, 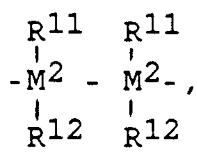, 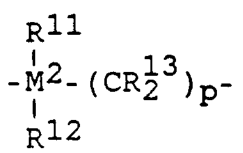, 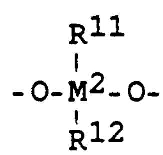, 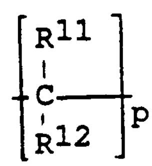

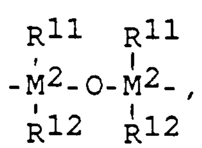, 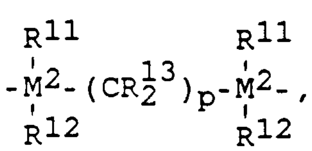, 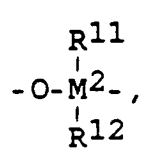, 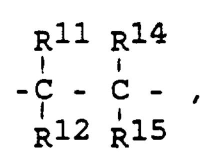,

$=BR^{11}$, $=AlR^{11}$, -Ge-, -Sn-, -O-, -S-, $=S=O$, $=SO_2$, $=NR^{11}$, $=CO$, $=PR^{11}$ oder $=P(O)R^{11}$ ist, wobei

$R^{11}$, $R^{12}$, $R^{13}$, $R^{14}$ und $R^{15}$ gleich oder verschieden sind und ein Wasserstoffatom, ein Halogenatom, eine $C_1$-$C_{10}$-Alkylgruppe, eine $C_1$-$C_{10}$-Fluoralkylgruppe, eine $C_6$-$C_{10}$-Arylgruppe, eine $C_6$-$C_{10}$-Fluorarylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten oder $R^{11}$ und $R^{12}$ oder $R^{11}$ und $R^{13}$ jeweils mit den sie verbindenden Atomen einen Ring bilden,

$M^2$ Silicium, Germanium oder Zinn ist,

p 1, 2 oder 3 ist,

$R^8$ und $R^9$ gleich oder verschieden sind und eine Gruppe $=CR^{11}R^{12}$, worin $R^{11}$ und $R^{12}$ die obengenannte Bedeutung haben, bedeuten
und

m und n gleich oder verschieden und null, 1 oder 2 sind, wobei m + n null, 1 oder 2 ist,

und die aluminiumorganische Verbindung ein Aluminoxan der Formel II ist

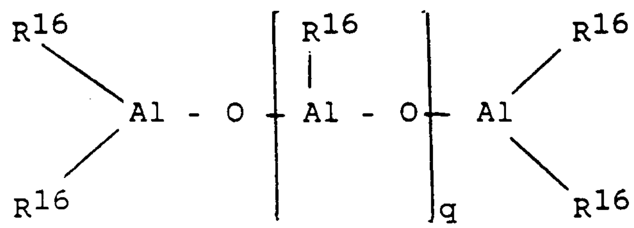

(II)

für den linearen Typ und/oder der Formel III

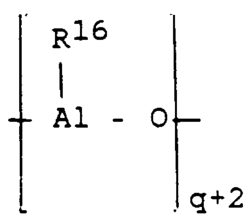

(III)

für den cyclischen Typ, worin $R^{16}$ eine $C_1$-$C_6$-Alkylgruppe, und q eine ganze Zahl von 2 bis 50, bedeuten.

Der für das erfindungsgemäße Verfahren zu verwendende Katalysator besteht aus einer Metallocenverbindung der Formel I und einem Aluminoxan. In Formel I

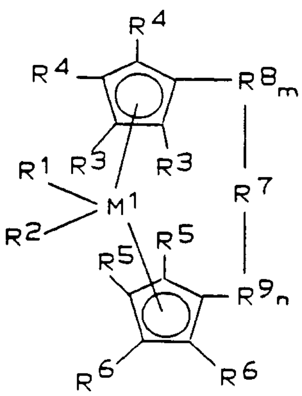

(I)

ist $M^1$ ein Metall der Gruppe IVb, Vb oder VIb des Periodensystems, beispielsweise Titan, Zirkon, Hafnium, Vanadium, Niob, Tantal, Chrom, Molybdän, Wolfram, vorzugsweise Zirkon und Hafnium.

$R^1$ und $R^2$ sind gleich oder verschieden und bedeuten ein Wasserstoffatom, eine $C_1$-$C_{10}$-, vorzugsweise $C_1$-$C_3$-Alkylgruppe, eine $C_1$-$C_{10}$-, vorzugsweise $C_1$-$C_3$-Alkoxygruppe, eine $C_6$-$C_{10}$-, vorzugsweise $C_6$-$C_8$-Arylgruppe, eine $C_6$-$C_{10}$-, vorzugsweise $C_6$-$C_8$-Aryloxygruppe, eine $C_2$-$C_{10}$, vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe oder ein Halogenatom, vorzugsweise Chlor.

$R^3$, $R^4$, $R^5$ und $R^6$ sind gleich oder verschieden, vorzugsweise verschieden, und bedeuten ein Wasserstoffatom, ein Halogenatom, vorzugsweise Fluor-, Chlor- oder Bromatom, eine $C_1$-$C_{10}$-, vorzugsweise $C_1$-$C_3$-Alkylgruppe, $-NR^{10}_2$ , $-SR^{10}$, $-OSiR^{10}_3$ , $-SiR^{10}_3$ , oder $PR^{10}_2$ , worin $R^{10}$ ein Halogenatom, vorzugsweise Chloratom, oder eine $C_1$-$C_{10}$-, vorzugsweise $C_1$-$C_3$-Alkylgruppe bedeutet, oder je zwei benachbarte $R^3$, $R^4$, $R^5$ oder $R^6$ bilden mit den sie verbindenden C-Atomen einen Ring.

$R^7$ ist

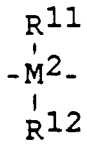, 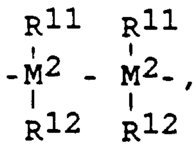, 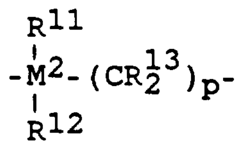, 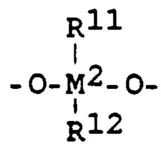, 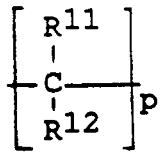

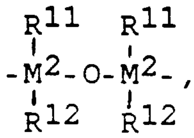, 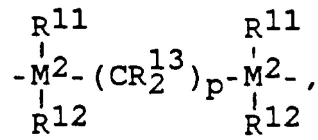, 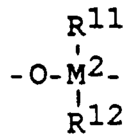, 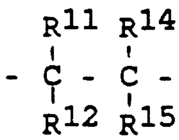

$=BR^{11}$, $=AlR^{11}$, -Ge-, -Sn-, -O-, -S-, $=S=O$, $=SO_2$, $=NR^{11}$, $=CO$, $=PR^{11}$ oder $=P(O)R^{11}$, wobei $R^{11}$, $R^{12}$, $R^{13}$, $R^{14}$ und $R^{15}$ gleich oder verschieden sind und ein Wasserstoffatom, ein Halogenatom, eine $C_1$-$C_{10}$-Alkylgruppe, vorzugsweise $C_1$-$C_4$-Alkylgruppe, insbesondere Methylgruppe, eine $C_1$-$C_{10}$-Fluoralkylgruppe, vorzugsweise $CF_3$-Gruppe, eine $C_6$-$C_{10}$-, vorzugsweise $C_6$-$C_8$-Arylgruppe, eine $C_6$-$C_{10}$-Fluorarylgruppe, vorzugsweise Pentafluorphenylgruppe, eine $C_1$-$C_{10}$-, vorzugsweise $C_1$-$C_4$-Alkoxygruppe, insbesondere Methoxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_8$-$C_{40}$-, vorzugsweise $C_8$-$C_{12}$-Arylalkenylgruppe oder eine $C_7$-$C_{40}$-, vorzugsweise $C_7$-$C_{12}$-Alkylarylgruppe, bedeuten oder $R^{11}$ und $R^{12}$ oder $R^{11}$ und $R^{13}$ bilden jeweils zusammen mit den sie verbindenden Atomen einen Ring.

$M^2$ ist Si, Ge oder Sn und p ist 1, 2 oder 3,

$R^7$ ist vorzugsweise $=SiR^{11}R^{12}$, $-=GeR^{11}R^{12}$, -S-, $=S=O$ oder $=PR^{11}$,

$R^8$ und $R^9$ sind gleich oder verschieden und bedeuten eine Gruppe $=CR^{11}R^{12}$, worin $R^{11}$ und $R^{12}$ die obengenannte Bedeutung haben,

m und n sind gleich oder verschieden und bedeuten null, 1 oder 2, wobei m + n null, 1 oder 2 ist. Vorzugsweise sind m und n null oder 1.

Die vorstehend beschriebenen Metallocene können nach folgendem Reaktionsschema hergestellt werden:

$$\left.\begin{array}{l} H_2R^a + ButylLi \rightarrow HR^aLi \\ H_2R^b + ButylLi \rightarrow HR^bLi \end{array}\right\} + X-R^8_m-R^7-R^9_n-X \rightarrow HR^a-R^8_m-R^7-R^9_n-R^bH$$

(X = Cl, Br, J, O-Tosyl, $HR^a$ = 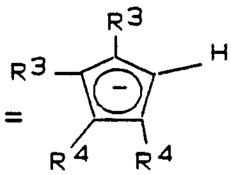 , $HR^b$ = 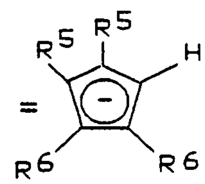 )

$$HR^a-R^8_m-R^7-R^9_n-R^bH + 2\ ButylLi \rightarrow LiR^a-R^8_m-R^5-R^9_n-R^bLi$$

$LiR^a-R^8_m-R^7-R^9_n-R^bLi$ + $M^1Cl_4$ → 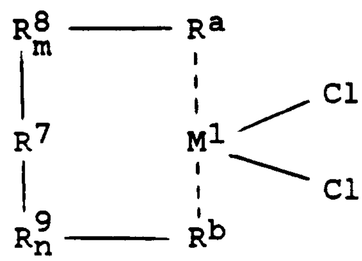

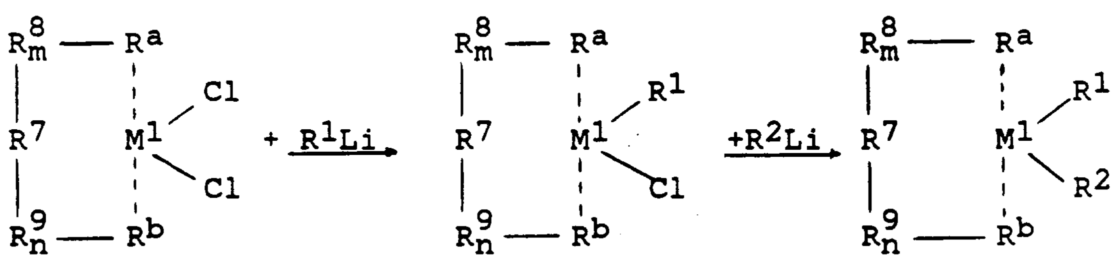


Die besonders bevorzugt eingesetzten Metallocenverbindungen sind rac-Ethylenbisindenylhafniumdichlorid, rac-Dimethylsilylbisindenylhafniumdichlorid, rac-Phenyl(methyl)silylbisindenylhafniumdichlorid und insbesondere rac-Dimethylsilylbisindenylzirkoniumdichlorid.

Der Aktivator ist ein Aluminoxan der Formel (II)

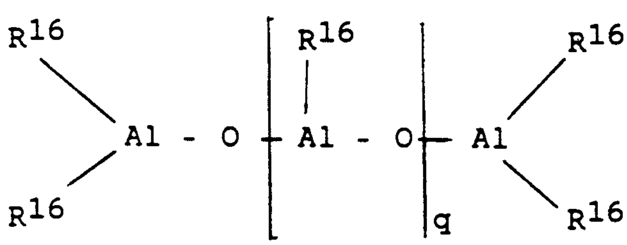 (II)

für den linearen Typ und/oder der Formel (III)

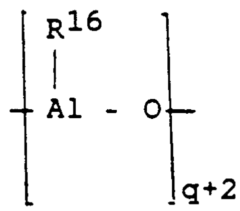

(III)

für den cyclischen Typ. In diesen Formeln bedeuten $R^{16}$ eine $C_1$-$C_6$-Alkylgruppe, vorzugsweise Methyl, Ethyl oder Isobutyl, insbesondere Methyl, und q eine ganze Zahl von 2 bis 50, bevorzugt 10 bis 40. Die exakte Struktur des Aluminoxans ist jedoch nicht gesichert, die Formeln II und III sind daher nur Näherungsformeln.

Das Aluminoxan kann auf verschiedene Art und Weise hergestellt werden.

Eine Möglichkeit ist die vorsichtige Zugabe von Wasser zu einer verdünnten Lösung eines Aluminiumtrialkyls, indem die Lösung des Aluminiumtrialkyls und das Wasser jeweils in kleinen Portionen in eine vorgelegte größere Menge eines inerten Lösemittels eingetragen werden und zwischendurch das Ende der Gasentwicklung jeweils abgewartet wird.

Bei einem anderen Verfahren wird fein gepulvertes Kupfersulfatpentahydrat in Toluol aufgeschlämmt und in einem Glaskolben unter Inertgas bei etwa -20 °C mit soviel Aluminiumtrialkyl versetzt, daß für je 4 Al-Atome etwa 1 mol $CuSO_4 \cdot 5H_2O$ zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30 °C ansteigt. Anschließend wird das im Toluol gelöste Aluminoxan von dem Kupfersulfat abfiltriert und die Lösung unter Vakuum eingeengt. Es wird angenommen, daß bei diesem Herstellungsverfahren die niedermolekularen Aluminoxane unter Abspaltung von Aluminiumtrialkyl zu höheren Oligomeren kondensieren.

Weiterhin erhält man Aluminoxane, wenn man bei einer Temperatur von -20 bis 100 °C in einem inerten aliphatischen oder aromatischen Lösemittel, vorzugsweise Heptan oder Toluol, gelöstes Aluminiumtrialkyl, vorzugsweise Aluminiumtrimethyl, mit kristallwasserhaltigen Aluminiumsalzen, vorzugsweise Aluminiumsulfat, zur Reaktion bringt. Dabei beträgt das Volumenverhältnis zwischen Lösemittel und dem verwendeten Aluminiumalkyl 1:1 bis 50:1 - vorzugsweise 5:1 - und die Reaktionszeit, die durch Messung der Abspaltung des Alkans kontrolliert werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluininiumsulfat-Hydrat, vor allem die Verbindungen $Al_2(SO_4)_3 \cdot 16H_2O$ und $Al_2(SO_4)_3 \cdot 18H_2O$ mit dem besonders hohen Kristallwassergehalt von 16 bzw. 18 mol $H_2O$/mol $Al_2(SO_4)_3$.

Eine weitere Variante zur Herstellung von Aluminoxanen besteht darin, Aluminiumtrialkyl, vorzugsweise Aluminiumtrimethyl, in dem im Polymerisationskessel vorgelegten Suspensionsmittel, vorzugsweise im flüssigen Monomeren, in Heptan oder Toluol, zu lösen und dann die Aluminiumverbindung mit Wasser umzusetzen.

Neben den zuvor geschilderten Verfahren zur Herstellung von Aluminoxanen gibt es weitere, welche brauchbar sind.

Es ist möglich, das Metallocen vor dem Einsatz in der Polymerisationsreaktion mit einem Aluminoxan der Formel (II) und/oder (III) vorzuaktivieren. Dadurch wird die Polymerisationsaktivität deutlich erhöht.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von $10^{-4}$ -1 mol pro mol Aluminoxan eingesetzt. Die Voraktivierungszeit beträgt 5 Minuten bis 60 Stunden, vorzugsweise 10 bis 60 Minuten. Man arbeitet bei einer Temperatur von -78 °C bis 100 °C, vorzugsweise 0 bis 70 °C.

Eine deutlich längere Voraktivierungszeit ist möglich und kann zu Lagerzwecken durchaus sinnvoll sein.

Die Homopolymerisation wird in bekannter Weise in Lösung, in Suspension oder in der Gasphase, kontinuierlich oder diskontinuierlich, ein- oder mehrstufig bei einer Temperatur von 0 bis 100 °C, vorzugsweise 40 bis 85 °C durchgeführt. Der Druck beträgt 5 bis 100 bar. Bevorzugt ist die Polymerisation in dem technisch besonders interessanten Druckbereich von 5 bis 49 bar.

Dabei wird die Metallocenverbindung in einer Konzentration, bezogen auf das Übergangsmetall, von $10^{-3}$ bis $10^{-7}$, vorzugsweise $10^{-4}$ bis $10^{-6}$ mol Übergangsmetall pro $dm^3$ Lösemittel bzw. pro $dm^3$ Reaktorvolumen angewendet. Das Aluminoxan wird in einer Konzentration von $10^{-4}$ bis $10^{-1}$ mol, vorzugsweise $10^{-3}$ bis $10^{-2}$ mol pro $dm^3$ Lösemittel bzw. pro $dm^3$ Reaktorvolumen verwendet. Prinzipiell sind aber auch höhere Konzentrationen möglich.

Bevorzugt wird in der ersten Reaktionsstufe das zu polymerisierende Monomere als Lösemittel oder Suspensionsmittel eingesetzt. Die Molmasse des Polymerisats kann in bekannter Weise geregelt werden; vorzugsweise wird dazu Wasserstoff verwendet. Die Dauer der Polymerisation ist beliebig, da das erfindungsgemäß zu verwendende Katalysatorsystem einen nur geringen zeitabhängigen Abfall der Polymerisationsaktivität zeigt.

Das erfindungsgemäße Verfahren wird in zwei Stufen durchgeführt, wobei in der ersten Stufe ein hochkristallines, isotaktisches Polypropylen oder mit einer geringen Menge eines anderen 1-Olefins als Comonomer modifiziertes Polypropylen und in der zweiten Stufe ein Ethylen-Propylen-Copolymer sowie ein kristallines, zum überwiegenden Teil aus Ethylen gebildetes Polymer hergestellt wird.

Beide in der zweiten Reaktionsstufe gebildeten Polymeren können durch ein weiteres 1-Olefin modifiziert sein.

Die Durchführung der Polymerisation in der ersten Reaktionsstufe geschieht bevorzugt in der Weise, daß flüssiges Propylen, eine Lösung des festen Katalysatoranteils in einem Lösemittel sowie die weiteren flüssigen Katalysatorbestandteile in ein geeignetes Reaktionsgefäß gepumpt werden. Dieses Reaktionsgefäß kann ein Autoklav, ein üblicher Reaktionskessel oder ein Rohrreaktor in Schleifenform sein, wobei wie üblich durch eingebaute Rührer oder Umwälzpumpen für eine ausreichende Durchmischung gesorgt wird.

Die Abführung der Reaktionswärme erfolgt durch Mantelkühlung, durch in die Gefäße eingebaute Innenkühlung oder auch durch Siedekühlung.

Das flüssige Propylen selbst, das sowohl als Monomer wie auch als Suspensionsmittel dient, kann wechselnde Mengen an inerten, niedrigsiedenden, gelösten Bestandteilen enthalten, wie z.B. Propan oder Stickstoff.

In der ersten Reaktionsstufe wird eine Reaktionstemperatur von 0 bis 100 °C, bevorzugt eine solche von 40 bis 85 °C eingehalten. Der Druck beträgt 5 bis 100 bar, vorzugsweise 5 bis 49 bar.

Die Einstellung der gewünschten Molmasse des Copolymeren kann durch Zugabe von Wasserstoff erfolgen.

Die Menge des in der ersten Stufe hergestellten Polymeren beträgt, bezogen auf das ganze bei dem Verfahren entstehende feste Polymer, 20 bis 99 Gew.-%, vorzugsweise 40 bis 95 Gew.-%, insbesondere 60 bis 95 Gew.-%.

Falls in der ersten Stufe ein mit geringen Mengen eines anderen 1-Olefins als Comonomer modifiziertes Polypropylen hergestellt werden soll, wird das Comonomere wie die anderen Ausgangsprodukte dosiert. Als andere 1-Olefine kommen Ethylen und bis zu 5 Mol-% einfach ungesättigte Kohlenwasserstoffe mit 4 bis 10 Kohlenstoffatomen in Frage, vorzugsweise Ethylen und Buten, insbesondere Ethylen. Die Konzentration des Ethylens oder 1-Olefins im flüssigen Propylen beträgt dabei 0 bis 20 Mol-%. Das Polymere aus der ersten Stufe besteht zu mindestens 95 Gew.-% aus polymerisiertem Propylen.

Die in der ersten Stufe entstandene Polymersuspension, die im wesentlichen das überwiegend kristalline, isotaktische Polypropylen, das gegebenenfalls mit geringen Mengen eines 1-Olefins modifiziert ist, die aktiven Katalysatorbestandteile, flüssiges Propylen, gewisse Mengen an Wasserstoff sowie gegebenenfalls inerte Anteile enthält, wird nunmehr in die zweite Reaktionsstufe überführt.

Dies kann in der Weise geschehen, daß zunächst überschüssiges Monomer oder Monomergemisch durch Filtration, Destillation oder schnelle Verdampfung (Flashung) vom Polymeren abgetrennt wird. Eine Kombination dieser Trennmethoden ist ebenfalls denkbar. Der Grad der Monomerabtrennung kann unterschiedlich hoch sein, er erfolgt mindestens bis zu einem Restmonomerdruck, der unterhalb des Siedepunktes des Monomeren bzw. des Monomergemisches liegt, so daß gewährleistet ist, daß kein Monomeranteil mehr in kondensierter (verflüssigter) Form vorliegt.

Nun wird Ethylen und/oder ein Propylen/Ethylengemisch und gegebenenfalls ein weiteres 1-Olefin mit 4 bis 10 C-Atomen in den Reaktor eingeleitet, bis der angestrebte Reaktordruck erreicht ist. Dieser wird so gewählt, daß er unterhalb des Gleichgewichtsiededrucks des Monomergemisches bei der eingestellten Reaktortemperatur liegt. Den Gleichgewichtsdruck kann man Tabellenwerken entnehmen.

Während der gesamten Polymerisationsdauer in der zweiten Stufe wird durch permanentes Einleiten von Ethylen und/oder eines Propylen/Ethylengemisches, wie es nach der Aufarbeitung des Reaktionsproduktes anfällt, eine gewünschte Monomerzusammensetzung aufrechterhalten.

Der Druck in der zweiten Stufe beträgt bei dieser Verfahrensweise 5 bis 100 bar, vorzugsweise 5 bis 49 bar.

Die Verweilzeiten in den einzelnen Reaktionsstufen werden so eingestellt, daß sie in der ersten Stufe 15 bis 400 Minuten, vorzugsweise 20 bis 180 Minuten, und in der zweiten Stufe 10 bis 180 Minuten, vorzugsweise 15 bis 90 Minuten betragen.

Es ist auch möglich, in der zweiten Stufe zusätzlich Aktivator nachzudosieren. Dies ist vor allem dann vorteilhaft, wenn die Polymerisation in der ersten Stufe bei einem niedrigen Molverhältnis von Aktivator zu Metallocen beziehungsweise bei niedriger Aktivatorkonzentration durchgeführt wird.

Falls erforderlich, wird in die zweite Stufe noch zusätzlicher Wasserstoff zur geeigneten Regelung der Molmasse der dort hergestellten Polymeren eingespeist.

Die Temperatur in der zweiten Polymerisationsstufe beträgt 0 bis 100 °C, vorzugsweise 40 bis 85 °C.

Nach Durchführung der zweiten Stufe wird das entstandene Polymer aufgearbeitet. Dies kann dadurch geschehen, daß man das resultierende Gemisch aus Polymer und Monomer in einer oder mehreren Stufen auf Atmosphärendruck entspannt und das restliche Monomer in den Kreislauf zurückführt.

Es ist aber auch möglich, nach der ersten Reaktionsstufe ohne Abtrennung von überschüssigem Propylen Ethylen und gegebenenfalls ein weiteres Monomer in die Suspension einzuleiten, bis die Zusammensetzung und thermodynamischen Eigenschaften von Flüssigphase und Gasphase identisch sind. Das Monomergemisch befindet sich dann in einem überkritischen Gaszustand und kann durch Anlegen eines äußeren Druckes nicht mehr verflüssigt werden. Die zum Erreichen des überkritischen Zustandes nötige Zusammensetzung des Gemisches ist abhängig von der Reaktionstemperatur und variiert von 0 bis 85 % Ethylen, sie beträgt beispielsweise ca. 63 Mol-% Ethylen bei ca. 50 °C und ca. 55 bar, ca. 38 Mol-% Ethylen bei ca. 68 °C und ca. 52 bar und ca. 12 Mol-% Ethylen bei ca. 85 °C und ca. 49 bar. Die für die jeweilige Temperatur relevanten Daten können im übrigen den einschlägigen Tabellenwerken entnommen werden.

Zweckmäßigerweise führt man die Polymerisation nicht nahe beim kritischen Druck des Monomergemisches durch, sondern fügt soviel Ethylen hinzu, daß der Reaktor in der zweiten Stufe bei 3 bis 50 bar, bevorzugt 3 bis 25 bar oberhalb des für die Reaktionstemperatur gültigen kritischen Drucks betrieben wird.

Während der gesamten Polymerisationsdauer in der zweiten Stufe wird durch permanentes Einleiten von Ethylen und/oder eines Propylen/Ethylengemisches, wie es nach der Aufarbeitung des Reaktionsproduktes anfällt, ein genügend hoher konstanter Druck aufrechterhalten.

Der Druck in der zweiten Stufe beträgt bei dieser Verfahrensweise 45 bis 100 bar, vorzugsweise 49 bis 65 bar.

Die Verweilzeiten in den einzelnen Reaktionsstufen werden so eingestellt, daß sie in der ersten Stufe 15 bis 400 Minuten, vorzugsweise 20 bis 180 Minuten, und in der zweiten Stufe 10 bis 180 Minuten, vorzugsweise 15 bis 90 Minuten betragen.

Es ist auch möglich, in der zweiten Stufe zusätzlich Aktivator nachzudosieren. Dies ist vor allem dann vorteilhaft, wenn die Polymerisation in der ersten Stufe bei einem niedrigen Molverhältnis von Aktivator zu Metallocen beziehungsweise bei niedriger Aktivatorkonzentration durchgeführt wird.

Falls erforderlich, wird während der zweiten Stufe noch zusätzlicher Wasserstoff zur geeigneten Regelung der Molmasse der dort hergestellten Polymeren eingespeist.

Führt man die erste Stufe nicht in einem vollständig flüssigkeitserfüllten Reaktor durch, so hat man auch die Möglichkeit, vor Beginn der zweiten Stufe den Wasserstoffgehalt der Suspension durch Entfernen von Gasgemisch aus der Gasphase herabzusetzen.

Die Temperatur in der zweiten Polymerisationsstufe beträgt 0 bis 100 °C, vorzugsweise 40 bis 80 °C.

Nach Durchführung der zweiten Stufe wird das entstandene Polymer aufgearbeitet. Dies kann dadurch geschehen, daß man das resultierende Gemisch aus Polymer und Monomer in einer oder mehreren Stufen auf Atmosphärendruck entspannt und das restliche Monomer gegebenenfalls in den Kreislauf zurückführt.

Die Aufarbeitung kann aber auch durch Filtration, Dekantation oder Zentrifugieren in dazu geeigneten, druckfesten Aggregaten geschehen, z.B. in Druckfiltern, Sedimentationsstürmen, Zentrifugen oder Dekantern.

Das nach dem erfindungsgemäßen Verfahren hergestellte Blockcopolymer weist neben einer ausreichenden Härte und hohen Fließfähigkeit eine gute Schlagzähigkeit über einen breiten Temperaturbereich auf, vor allem aber bei tiefen Temperaturen von -40 °C und -60 °C.

Diese Polymeren übertreffen die bisher mit Katalysatorsystemen nach dem Stand der Technik hergestellten Polymeren in ihrer Tieftemperaturschlagzähigkeit bei weitem, wie aus dem Vergleich mit dem mit

Metallocenkatalysatoren hergestellten Homopolymeren ersehen werden kann.

Gegenüber den mit Katalysatoren auf $MgCl_2$-Basis hergestellten Blockpolymeren zeichnen sich die erfindungsgemäß hergestellten Produkte durch hohe Katalysatorausbeute, eine bei sehr tiefer Temperatur und in einem sehr engen Temperaturbereich erfolgende Erstarrung der amorphen Phase und damit sehr gute Tieftemperaturschlagzähigkeit aus.

Für die Weiterverarbeitung wird das erfindungsgemäß gewonnene Blockcopolymer mit den üblichen Zusätzen (Stabilisatoren, Gleitmittel, Füllstoffe, Pigmente etc.) versehen. Es kann ohne weitere Vorbehandlung in Extrudern oder Knetern direkt zur Herstellung von Kunststofformkörpern verwendet werden.

Es kann aber auch in Extrudern oder Kneten in Granulatform überführt werden. Dieser zusätzliche Verarbeitungsschritt kann zu einer Verbesserung der mechanischen Eigenschaften der hergestellten Formkörper führen.

Die Bestimmung der Eigenschaften der gemäß den nachfolgenden Beispielen hergestellten Polymeren wurde im einzelnen nach folgenden Methoden durchgeführt:

Der Schmelzindex (MFI) wurde nach DIN 53 735 gemessen und in g/10 min angegeben.

Die Viskositätszahl VZ der Polymeren wurde an 0,1 Gew.-%igen Lösungen in Dekahydronaphthalin (Isomerengemisch) bei 135 °C in einem Kapillarviskosimeter bestimmt und in $cm^3/g$ angegeben.

Die Messung der Kugeldruckhärten (KDH) erfolgte in Anlehnung an DIN 53 456 an gepreßten Platten, die 3 h bei 100 oder 120 °C unter $N_2$ getempert, im Laufe von 3 h abgekühlt und zum Temperaturausgleich 24 h bei 23 °C und 50 % rel. Luftfeuchte in einer Klimakammer gelagert worden waren.

Zur Bestimmung der mechanischen Eigenschaften bei tiefen Temperaturen wurde der Schlagbiegeversuch bei -40 °C und -60 °C am Normkleinstab mit V-Einkerbung (Flankenwinkel 45°, Kerbtiefe 1,3 mm, Kerbradius 1 mm) herangezogen. Die Probekörper wurden gepreßten Platten entnommen, die nach Herstellung 24 h bei 23 °C und 50 % rel. Luftfeuchte gelagert worden waren.

Die Bestimmung des Ethylengehaltes erfolgte IR-spektrometrisch an 0,1 mm dicken, bei 180 °C gepreßten Folien, wobei die Absorptionsbanden bei den Wellenlängen 13,65 und 13,9 µm zur Auswertung herangezogen wurden.

Die Bestimmung des Anteils an nichtkristallinem Ethylen-Propylen-Copolymer erfolgte durch Umkristallisation der Blockcopolymeren aus einem Benzingemisch (Siedebereich 140 bis 170 °C) und Ausfällen der darin bei 25 °C löslichen Anteile mit Aceton.

**Beispiel 1**

Ein trockener Kessel mit 16 $dm^3$ Inhalt wurde mit Stickstoff gespült und mit 10 $dm^3$ flüssigem Propylen befüllt. Dann wurden 44 $cm^3$ toluolische Methylaluminoxanlösung (= MAO, entsprechend 64 mmol Al, mittlerer Oligomerisierungsgrad n = 20) zugegeben und der Ansatz bei 30 °C 15 min gerührt. Parallel dazu wurden 34,5 mg (0,064 mmol) rac-Dimethylsilylbisindenylhafniumdichlorid in 23 $cm^3$ MAO-Lösung (=34 mmol Al) gelöst und durch 15 minütiges Stehenlassen voraktiviert.

Die Lösung wurde dann in den Kessel gegeben. Das Polymerisationssystem wurde auf eine Temperatur von 70 °C aufgeheizt und dann 80 min bei dieser Temperatur gehalten. Gegen Ende der Reaktionszeit wurde überschüssiges Monomer abgedampft, bis der Kesselinnendruck auf 20 bar bei 70 °C Innentemperatur gefallen und keine Flüssigphase mehr vorhanden war. Nun wurde ein gasförmiges Gemisch aus 26 % Ethylen und 74 % Propylen eingeleitet und der Reaktordruck auf 28,2 bar eingestellt. Dieser Druck wurde während der restlichen 15 min Reaktionszeit durch Nachspeisen von Ethylen aufrechterhalten.

Man erhielt 0,44 kg Blockcopolymer.

Das Polymer besaß eine VZ von 113. 5,6 Gew.-% des Polymeren waren durch Polymerisation von Ethylen entstanden.

Durch Umkristallisation aus dem Benzingemisch wurden 76 % kristallisierbare Anteile, bezogen auf das gesamte Polymer, mit einem Ethylengehalt von 0,4 Gew.-% und einer VZ von 110 erhalten. Aus der Mutterlauge erhielt man durch Fällen mit Aceton 24 %, bezogen auf das Blockcopolymer, einer kautschukartigen Masse mit 22 Gew.-% Ethylengehalt und einer VZ von 123.

In der aus der Differentialthermoanalyse erhaltenen Enthalpiekurve (-180 bis 200 °C, Heizrate 2 K/min) waren unterhalb des Temperaturnullpunktes zwei Glasumwandlungen in den Temperaturbereichen von -60 bis -48 °C und von -31 bis -19 °C zu beobachten. Das Schmelzen des Polymeren erfolgte ebenfalls in zwei Abschnitten bei 133 und 154 °C. Das Polymer besaß einen MFI 230/2,16 von 51 g/10 min, bei -40 °C eine Kerbschlagzähigkeit von 6,4 $mJ/mm^2$ und bei -60 °C eine Kerbschlagzähigkeit von 2,9 $mJ/mm^2$.

**Beispiel 2**

Ein trockener Kessel mit 70 $dm^3$ Inhalt wurde mit Stickstoff gespült und mit 40 $dm^3$ flüssigem Propylen befüllt. Dann wurden 174 $cm^3$ toluolische Methylaluminoxanlösung (= MAO, entsprechend 256 mmol Al, mittlerer Oligomerisierungsgrad n = 20) zugegeben und der Ansatz bei 30 °C 15 min gerührt. Parallel dazu wurden 71,9 mg (0,134 mmol) rac-Dimethylsilylbisindenylhafniumdichlorid in 90 $cm^3$ MAO-Lösung (= 132 mmol Al) gelöst und durch 15 minütiges Stehenlassen voraktiviert.
Die Lösung wurde dann in den Kessel gegeben. Das Polymerisationssystem wurde auf eine Temperatur von 70 °C aufgeheizt und dann 60 min bei dieser Temperatur gehalten. Nach Absenken der Temperatur auf 60 °C wurde Ethylen in die Suspension eingeleitet, bis der Siededruck des Monomergemisches auf 55 bar gestiegen war. Dieser Druck wurde während der restlichen 15 min Reaktionszeit durch Nachspeisen von Ethylen aufrechterhalten.
Man erhielt 1,65 kg Blockcopolymer.
Das Polymer besaß eine VZ von 194. 10,2 Gew.-% des Polymeren waren durch Polymerisation von Ethylen entstanden. Durch Umkristallisation aus dem Benzingemisch wurden 78 % kristallisierbare Anteile, bezogen auf das gesamte Polymer, mit einem Ethylengehalt von 0,5 Gew.-% und einer VZ von 200 erhalten. Aus der Mutterlauge erhielt man durch Fällen mit Aceton 22 %, bezogen auf das Blockcopolymer, einer kautschukartigen Masse mit 45 Gew.-% Ethylengehalt und einer VZ von 172.

In der aus der Differentialthermoanalyse erhaltenen Enthalpiekurve (-180 bis 200 °C, Heizrate 2 K/min) waren unterhalb des Temperaturnullpunktes zwei Glasumwandlungen in den Temperaturbereichen von -58 bis -45 °C und von -29 bis 17 °C zu beobachten. Das Schmelzen des Polymeren erfolgte ebenfalls in zwei Abschnitten bei 131 und 153 °C. Das Polymere besaß einen MFI 2-0/2,16 von 5,5 g/10 min, bei -40 °C eine Kerbschlagzähigkeit von 7,5 $mJ/mm^2$ und bei -60 °C eine Kerbschlagzähigkeit von 3,8 $mJ/mm^2$.

**Beispiel 3**

Ein trockener Kessel mit 70 $dm^3$ Inhalt wurde mit Stickstoff gespült und mit 40 $dm^3$ flüssigem Propylen befüllt. Dann wurden 174 $cm^3$ toluolische Methylaluminoxanlösung (= MAO, entsprechend 256 mmol Al, mittlerer Oligomerisierungsgrad n = 20) zugegeben und der Ansatz bei 30 °C 15 min gerührt. Parallel dazu wurden 71,9 mg (0,134 mmol) rac-Dimethylsilylbisindenylhafniumdichlorid in 90 $cm^3$ MAO-Lösung (= 132 mmol Al) gelöst und durch 15 minütiges Stehenlassen voraktiviert.

Die Lösung wurde dann in den Kessel gegeben. Das Polymerisationssystem wurde auf eine Temperatur von 70 °C aufgeheizt und dann 60 min bei dieser Temperatur gehalten. Nach Absenken der Temperatur auf 65 °C wurde Ethylen in die Suspension eingeleitet, bis der Siededruck des Monomergemisches auf 56 bar gestiegen war. Dieser Druck wurde während der restlichen 15 min Reaktionszeit durch Nachspeisen von Ethylen aufrechterhalten.
Man erhielt 1,64 kg Blockcopolymer.
Das Polymer besaß eine VZ von 205. 10,1 Gew.-% des Polymeren waren durch Polymerisation von Ethylen entstanden. Durch Umkristallisation aus dem Benzingemisch wurden 76 % kristallisierbare Anteile, bezogen auf das gesamte Polymer, mit einem Ethylengehalt von 0,6 Gew.-% und einer VZ von 210 erhalten. Aus der Mutterlauge erhielt man durch Fällen mit Aceton 24 %, bezogen auf das Blockcopolymer, einer kautschukartigen Masse mit 40,2 Gew.-% Ethylengehalt und einer VZ von 189.
In der aus der Differentialthermoanalyse erhaltenen Enthalpiekurve (-180 bis 200 °C, Heizrate 2 K/min) waren unterhalb des Temperaturnullpunktes zwei Glasumwandlungen in den Temperaturbereichen von -60 bis -49 °C und von -30 bis -17 °C zu beobachten. Das Schmelzen des Polymeren erfolgte ebenfalls in zwei Abschnitten bei 133 und 156 °C.

Das Polymer besaß einen MFI 230/2,16 von 4,3 g/10 min, bei -40 °C eine Kerbschlagzähigkeit von 9,1 $mJ/mm^2$ und bei -60 °C eine Kerbschlagzähigkeit von 3,4 $mJ/mm^2$.

**Beispiel 4**

Ein trockener Kessel mit 70 $dm^3$ Inhalt wurde mit Stickstoff gespült und mit 40 $dm^3$ flüssigem Propylen befüllt. Dann wurden 174 $cm^3$ toluolische Methylaluminoxanlösung (= MAO, entsprechend 256 mmol Al, mittlerer Oligomerisierungsgrad n = 20) zugegeben und der Ansatz bei 30 °C 15 min gerührt. Parallel dazu wurden 71,1 mg (0,133 mmol) rac-Dimethylsilylbisindenylhafniumdichlorid in 90 $cm^3$ MAO-Lösung (= 132 mmol Al) gelöst und durch 15 minütiges Stehenlassen voraktiviert.
Die Lösung wurde dann in den Kessel gegeben. Das Polymerisationssystem wurde auf eine Temperatur von 70 °C aufgeheizt und dann 60 min bei dieser Temperatur gehalten. Es wurde Ethylen in die

Suspension eingeleitet, bis der Siededruck des Monomergemisches auf 55 bar gestiegen war. Dieser Druck wurde während der restlichen 15 min Reaktionszeit durch Nachspeisen von Ethylen aufrechterhalten.
Man erhielt 2,38 kg Blockcopolymer.
Das Polymer besaß eine VZ von 204. 11,2 Gew.-% des Polymeren waren durch Polymerisation von Ethylen entstanden. Durch Umkristallisation aus dem Benzingemisch wurden 72 % kristallisierbare Anteile, bezogen auf das gesamte Polymer, mit einem Ethylengehalt von 0,5 Gew.-% und einer VZ von 195 erhalten. Aus der Mutterlauge erhielt man durch Fällen mit Aceton 28 %, bezogen auf das Blockcopolymer, einer kautschukartigen Masse mit 39 Gew.-% Ethylengehalt und einer VZ von 227.
In der aus der Differentialthermoanalyse erhaltenen Enthalpiekurve (-180 bis 200 °C, Heizrate 2 K/min) waren unterhalb des Temperaturnullpunktes zwei Glasumwandlungen in den Temperaturbereichen von -60 bis -49 °C und von -28 bis -18 °C zu beobachten. Das Schmelzen des Polymeren erfolgte ebenfalls in zwei Abschnitten bei 133 und 156 °C. Das Polymere besaß einen MFI 230/2,16 von 4,1 g/10 min, bei -40 °C eine Kerbschlagzähigkeit von 10,3 $mJ/mm^2$ und bei -60 eine Kerbschlagzähigkeit von 4,4 $mJ/mm^2$.

**Beispiel 5**

Ein trockener Kessel mit 70 $dm^3$ Inhalt wurde mit Stickstoff gespült und mit 40 $dm^3$ flüssigem Propylen befüllt. Dann wurden 174 $cm^3$ toluolische Methylaluminoxanlösung (= MAO, entsprechend 256 mmol Al, mittlerer Oligomerisierungsgrad n = 20) zugegeben und der Ansatz bei 30 °C 15 min gerührt. Parallel dazu wurden 64,8 mg (0,121 mmol) rac-Dimethylsilylbisindenylhafniumdichlorid in 90 $cm^3$ MAO-Lösung (= 132 mmol Al) gelöst und durch 15 minütiges Stehenlassen voraktiviert.
Die Lösung wurde dann in den Kessel gegeben. Das Polymerisationssystem wurde auf eine Temperatur von 70 °C aufgeheizt und dann 60 min bei dieser Temperatur gehalten. Es wurde Ethylen in die Suspension eingeleitet, bis der Siededruck des Monomergemisches auf 55 bar gestiegen war. Dieser Druck wurde während der restlichen 25 min Reaktionszeit durch Nachspeisen von Ethylen aufrechterhalten.
Man erhielt 1,4 kg Blockcopolymer.
Das Polymer besaß eine VZ von 185. 15,8 Gew.-% des Polymeren waren durch Polymerisation von Ethylen entstanden. Durch Umkristallisation aus dem Benzingemisch wurden 57 % kristallisierbare Anteile, bezogen auf das gesamte Polymer, mit einem Ethylengehalt von 0,4 Gew.-% und einer VZ von 197 erhalten. Aus der Mutterlauge erhielt man durch Fällen mit Aceton 43 %, bezogen auf das Blockcopolymer, einer kautschukartigen Masse mit 36 Gew.-% Ethylengehalt und einer VZ von 169.

In der aus der Differentialthermoanalyse erhaltenen Enthalpiekurve (-180 bis 200 °C, Heizrate 2 K/min) waren unterhalb des Temperaturnullpunktes zwei Glasumwandlungen in den Temperaturbereichen von -59 bis -45 °C und von -31 bis -20 °C zu beobachten. Das Schmelzen des Polymeren erfolgte ebenfalls in zwei Abschnitten bei 129 und 150 °C. Das Polymer besaß einen MFI 230/2,16 von 6,2 g/10 min, bei -40 °C eine Kerbschlagzähigkeit von 7,7 $mJ/mm^2$ und bei -60 eine Kerbschlagzähigkeit von 2,9 $mJ/mm^2$.

**Beispiel 6**

Ein trockener Kessel mit 70 $dm^3$ Inhalt wurde mit Stickstoff gespült und mit 40 $dm^3$ flüssigem Propylen befüllt. Dann wurden 174 $cm^3$ toluolische Methylaluminoxanlösung (= MAO, entsprechend 256 mmol Al, mittlerer Oligomerisierungsgrad n = 20) zugegeben und der Ansatz bei 30 °C 15 min gerührt. Parallel dazu wurden 65,2 mg (0,122 mmol) rac-Dimethylsilylbisindenylhafniumdichlorid in 90 $cm^3$ MAO-Lösung (= 132 mmol Al) gelöst und durch 15 minütiges Stehenlassen voraktiviert.
Die Lösung wurde dann in den Kessel gegeben. Das Polymerisationssystem wurde auf eine Temperatur von 70 °C aufgeheizt und dann 60 min bei dieser Temperatur gehalten. Es wurde Ethylen in die Suspension eingeleitet, bis der Siededruck des Monomergemisches auf 55 bar gestiegen war. Dieser Druck wurde während der restlichen 35 min Reaktionszeit durch Nachspeisen von Ethylen aufrechterhalten.
Man erhielt 1,9 kg Blockcopolymer.
Das Polymer besaß eine VZ von 184. 18,3 Gew.-% des Polymeren waren durch Polymerisation von Ethylen entstanden. Durch Umkristallisation aus dem Benzingemisch wurden 49 % kristallisierbare Anteile, bezogen auf das gesamte Polymer, mit einem Ethylengehalt von 0,6 Gew.-% und einer VZ von 198 erhalten. Aus der Mutterlauge erhielt man durch Fällen mit Aceton 51 %, bezogen auf das Blockcopolymer, einer kautschukartigen Masse mit 35 Gew.-% Ethylengehalt und einer VZ von 171.
In der aus der Differentialthermoanalyse erhaltenen Enthalpiekurve (-180 bis 200 °C, Heizrate 2 K/min) waren unterhalb des Temperaturnullpunktes Zwei Glasumwandlungen in den Temperaturbereichen von -61 bis -50 °C und von -33 bis -25 °C zu beobachten. Das Schmelzen des Polymeren erfolgte ebenfalls in zwei Abschnitten bei 136 und 158 °C. Das Polymere besaß einen MFI 230/2,16 von 3,3 g/10 min, bei -40 °C eine

Kerbschlagzähigkeit von 7,9 mJ/mm$^2$ und bei -60° eine Kerbschlagzähigkeit von 2,9 mJ/mm$^2$.

**Vergleichsbeispiel A**

Ein trockener Kessel mit 16 dm$^3$ Inhalt wurde mit Stickstoff gespült und mit 10 dm$^3$ flüssigem Propylen befüllt. Dann wurden 43 cm$^3$ toluolische Methylaluminoxanlösung (= MAO, entsprechend 68 mmol Al, mittlerer Oligomerisierungsgrad n = 20) zugegeben und der Ansatz bei 30 °C 15 min gerührt. Parallel dazu wurden 42,6 mg (0,079 mmol) rac-Dimethylsilylbisindenylhafniumdichlorid in 21,4 cm$^3$ MAO-Lösung (= 34 mmol Al) gelöst und durch 15 minütiges Stehenlassen voraktiviert.
Die Lösung wurde dann in den Kessel gegeben. Das Polymerisationssystem wurde auf eine Temperatur von 70 °C aufgeheizt und dann 60 min bei dieser Temperatur gehalten. Man erhielt 2,15 kg Polymer mit einer VZ von 173. Durch Umkristallisation aus dem Benzingemisch wurden 99,7 Gew.-% kristallisierbare Anteile, bezogen auf das gesamte Polymer, erhalten.
Aus der Mutterlauge erhielt man durch Fällen mit Aceton 0,3 Gew.-%, bezogen auf das Polymer einer klebrigen Masse. In der aus der Differentialthermoanalyse erhaltenen Enthalpiekurve (-180 bis 200 °C, Heizrate 2 K/min) waren unterhalb des Temperaturnullpunktes keine Glasumwandlung zu beobachten. Das Schmelzen des Polymeren erfolgte bei 159°C. Das Polymer besaß einen MFI 230/2,16 von 17 g/10 min, bei -40°C eine Kerbschlagzähigkeit von 1,6 mJ/mm$^2$ und bei -60° eine Kerbschlagzähigkeit von 1,3 mJ/mm$^2$.

**Vergleichsbeispiel B**

Herstellung einer festen Titan-Katalysatorkomponente

9,52 g (100 mmol) wasserfreies Magnesiumchlorid, 50 cm$^3$ Decan und 46,8 cm$^3$ (300 mmol) 2-Ethylhexylakohol wurden bei 130°C 2 h zur Reaktion gebracht, so daß sich eine einheitliche Lösung bildete. Hierzu gab man 2,22 g (15,0 mmol) Phthalsäureanhydrid. Die Mischung wurde 1 h bei 130°C weiter gerührt, bis sich das Phthalsäureanhydrid gelöst hatte. Die erhaltene Lösung wurde auf Raumtemperatur abgekühlt und im Verlauf 1 h mit 400 cm$^3$ (3,6 mol) bei -20°C gehaltenem Titantetrachlorid tropfenweise versetzt, worauf die Mischung 4 h auf 110°C erhitzt wurde. Als die Temperatur von 110°C erreicht war, wurden 5,36 cm$^3$ (25,0 mmol) Diisobutyl-phthalat zugegeben. Die Mischung wurde weitere 2 h bei dieser Temperatur unter Rühren gehalten. Danach wurde der Ansatz heiß filtriert, um den festen Anteil zu erhalten, der erneut in 400 cm$^3$ Titantetrachlorid suspendiert und 2 h bei 110°C umgesetzt wurde. Danach wurde der feste Anteil durch Heißfiltrieren gesammelt und mit 110°C heißem Decan und Hexan gewaschen, bis in den Waschlösemitteln keine freie Titanverbindung mehr nachgewiesen werden konnte.
Die so erhaltene feste Titan-Katalysatorkomponente wurde in Form einer Suspension in Hexan aufbewahrt. Ein Teil der Suspension wurde getrocknet, um die Zusammensetzung des Katalysators zu untersuchen. Die Analyse ergab 2,5 Gew.-% Titan, 56,4 Gew.-% Chlor, 17,5 Gew.-% Magnesium und 21,0 Gew.-% Diisobutylphthalat.

**Polymerisation**

In einem Kessel mit 70 dm$^3$ Inhalt wurde $H_2$ bis zu einem Innendruck von 1,5 bar vorgelegt, 40 dm$^3$ flüssiges Propylen eingefüllt und nacheinander 200 mmol Triethylaluminium, 40 mmol Diphenyldimethoxysilan und 4,53 cm$^3$ der oben beschriebenen Kontaktsuspension (entspricht 0,08 mmol Ti) eindosiert. Nun wurde der Kesselinhalt auf 70°C aufgeheizt und die Polymerisation des Propylens 80 min durchgeführt. Nach Absenken der Innentemperatur auf 60°C innerhalb von 10 min wurde Ethylen eingeleitet und der Innendruck auf 32 bar eingestellt. Dieser Druck wurde während der restlichen 50 min Reaktionszeit durch Nachspeisen von Ethylen aufrechterhalten.
Man erhielt 0,75 kg Blockcopolymer.
Das Polymer besaß eine VZ von 138. 5,7 Gew.-% des Polymeren waren durch Polymerisation von Ethylen entstanden. Durch Umkristallisation aus dem Benzingemisch wurden 94 % kristallisierbare Anteile, bezogen auf das gesamte Polymer, mit einem Ethylengehalt von 3,0 Gew.-% und einer VZ von 139 erhalten. Aus der Mutterlauge erhielt man durch Fällen mit Aceton 6 %, bezogen auf das Blockcopolymer, einer kautschukartigen Masse mit 47 Gew.-% Ethylengehalt und einer VZ von 79.
In der aus der Differentialthermoanalyse erhaltenen Enthalpiekurve (-180 bis 200 °C, Heizrate 2 K/min) war unterhalb des Temperaturnullpunktes eine Glasumwandlung in dem Temperaturbereich von -56 bis -25°C zu beobachten. Das Polymere besaß einen MFI 230/2,16 von 230 g/10 min, bei -40 °C eine Kerbschlagzähigkeit von 0,9 mJ/mm² und bei -60 °C eine Kerbschlagzähigkeit von 0,6 mJ/mm².

**Patentansprüche**

1. Verfahren zur Herstellung einer Polypropylen-Formmasse, bestehend aus
   (1) 20 bis 99 Gew.-% eines kristallinen, isotaktischen Polymers, welches zu mindestens 95 Gew.-% aus polymerisiertem Propylen besteht,
   (2) 1 bis 80 Gew.-% eines nicht kristallinen Ethylen-Propylen-Copolymeren mit einem Ethylengehalt von 20 bis 90 Gew.-%,

   wobei man zunächst in einer oder mehreren Stufen in flüssigem Propylen bei einer Verweilzeit von 15 bis 400 Minuten, einem Druck von 5 bis 100 bar und einer Temperatur von 0 bis 100 °C das Polymer (1) und in einer zweiten Stufe bei einer Verweilzeit von 10 bis 180 Minuten, einem Druck von 5 bis 100 bar und einer Temperatur von 0 bis 100 °C in Gegenwart von Ethylen in der Gasphase das Polymer (2) herstellt, in Gegenwart einer Katalysators, welcher aus einer Übergangsmetallverbindung und einer aluminiumorganischen Verbindung besteht, dadurch gekennzeichnet, daß die Polymerisation in der zweiten Stufe in der Gasphase stattfindet und daß die Übergangsmetallverbindung ein Metallocen der Formel I

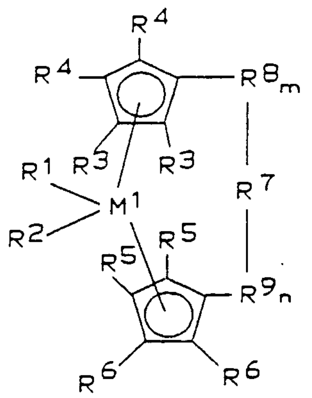

(I)

ist, worin

| | |
|---|---|
| $M^1$ | ein Metall der Gruppe IVb, Vb oder VIb des Periodensystems ist, |
| $R^1$ und $R^2$ | gleich oder verschieden sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten, |
| $R^3$, $R^4$, $R^5$ und $R^6$ | gleich oder verschieden sind und ein Wasserstoffatom, ein Halogenatom, eine $C_1$-$C_{10}$-Alkylgruppe, $-NR^{10}_2$, $-SR^{10}$, $-OSiR^{10}_3$, $-SiR^{10}_3$ oder $PR^{10}_2$, worin $R^{10}$ ein Halogenatom oder eine $C_1$-$C_{10}$-Alkylgruppe ist, bedeuten, oder je zwei benachbarte $R^3$, $R^4$, $R^5$ oder $R^6$ mit den sie verbindenden C-Atomen ein Ring bilden, |
| $R^7$ | |

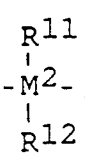 , 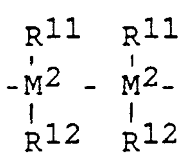 , 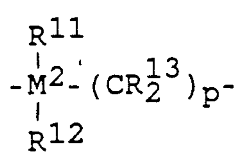 , 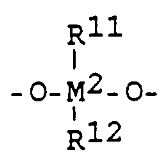 , 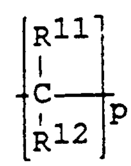

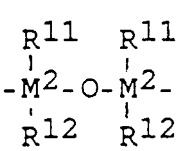 , 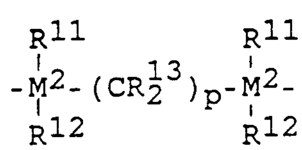 , 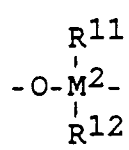 , 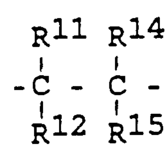 ,

| | |
|---|---|
| | $=BR^{11}$, $=AlR^{11}$, -Ge-, -Sn-, -O-, -S-, $=S=O$, $=SO_2$, $=NR^{11}$, $=CO$, $=PR^{11}$ oder $=P(O)R^{11}$ ist, wobei |
| $R^{11}$, $R^{12}$, $R^{13}$, $R^{14}$ und $R^{15}$ | gleich oder verschieden sind und ein Wasserstoffatom, ein Halogenatom, eine $C_1$-$C_{10}$-Alkylgruppe, eine $C_1$-$C_{10}$-Fluoralkylgruppe, eine $C_6$-$C_{10}$-Arylgruppe, eine $C_6$-$C_{10}$-Fluorarylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten oder $R^{11}$ und $R^{12}$ oder $R^{11}$ und $R^{13}$ jeweils mit den sie verbindenden Atomen einen Ring bilden, |
| $M^2$ | Silicium, Germanium oder Zinn ist, |
| p | 1, 2 oder 3 ist, |
| $R^8$ und $R^9$ | gleich oder verschieden sind und eine Gruppe $=CR^{11}R^{12}$, worin $R^{11}$ und $R^{12}$ die obengenannte Bedeutung haben, bedeuten und |
| m und n | gleich oder verschieden und null, 1 oder 2 sind, wobei m + n null, 1 oder 2 ist, |

und die aluminiumorganische Verbindung ein Aluminoxan der Formel II ist

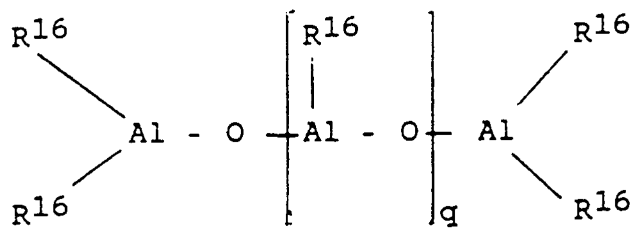

(II)

für den linearen Typ und/oder der Formel III

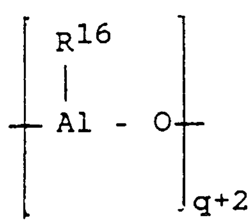

(III)

für den cyclischen Typ, worin $R^{16}$ eine $C_1$-$C_6$-Alkylgruppe, und q eine ganze Zahl von 2 bis 50, bedeuten.

2. Verfahren nach Anspruch 1, dadurch gekennzeichnet, daß bei der Herstellung der Polymeren (1) und (2) bis zu 5 Mol-% eines 1-Olefins mit 4 bis 10 C-Atomen zusätzlich eingesetzt werden.

3. Verfahren nach Anspruch 1 oder 2, dadurch gekennzeichnet, daß vor der Durchführung der zweiten Stufe die Monomeren der ersten Stufe abgetrennt werden.

4. Verfahren nach Anspruch 1 oder 2, dadurch gekennzeichnet, daß das Ethylen in mindestens einer solchen Menge in die das Polymer (1) enthaltende Suspension eingeleitet wird, daß das Monomerengemisch den flüssigen Aggregatzustand verläßt und in einen überkritischen Zustand übergeht.

5. Polypropylen-Formmasse, herstellbar nach dem Verfahren nach Anspruch 1 oder 2.

6. Verwendung der nach Anspruch 1 oder 2 herstellbaren Polypropylen-Formmasse zur Herstellung von Formkörpern.

## Claims

**1.** A process for the preparation of a polypropylene molding composition consisting of

(1) 20 to 99 % by weight of a crystalline, isotactic polymer which consists to the extent of at least 95 % by weight of polymerized propylene and

(2) 1 to 80 % by weight of a non-crystalline ethylene-propylene copolymer having an ethylene content of 20 to 90 % by weight,

in which first the polymer (1) is prepared in one or more stages in liquid propylene over a residence time of 15 to 400 minutes, under a pressure of 5 to 100 bar and at a temperature of 0 to 100 °C, and the polymer (2) is prepared in a second stage over a residence time of 10 to 180 minutes, under a pressure of 5 to 100 bar and at a temperature of 0 to 100 °C in the presence of ethylene in the gas phase, in the presence of a catalyst which consists of a transition metal compound and an organoaluminum compound, which comprises carrying out the polymerization in the second stage in the gas phase, and using a transition metal compound which is a metallocene of the formula I

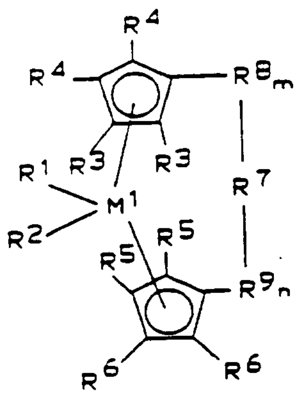

(I)

in which

| | |
|---|---|
| $M^1$ | is a metal of group IVb, Vb or VIb of the periodic table, |
| $R^1$ and $R^2$ | are identical or different and are a hydrogen atom, a $C_1$-$C_{10}$-alkyl group, a $C_1$-$C_{10}$-alkoxy group, a $C_6$-$C_{10}$-aryl group, a $C_6$-$C_{10}$-aryloxy group, a $C_2$-$C_{10}$-alkenyl group, a $C_7$-$C_{40}$-arylalkyl group, a $C_7$-$C_{40}$-alkylaryl group, a $C_8$-$C_{40}$-arylalkenyl group or a halogen atom, |
| $R^3$, $R^4$, $R^5$ and $R^6$ | are identical or different and are a hydrogen atom, a halogen atom, a $C_1$-$C_{10}$-alkyl group, $-NR^{10}_2$ , $-SR^{10}$, $-OSiR^{10}_3$ , $-SiR^{10}_3$ or $PR^{10}_2$ , in which $R^{10}$ is a halogen atom or a $C_1$-$C_{10}$-alkyl group, or in each case two adjacent $R^3$, $R^4$, $R^5$ or $R^6$ form a ring with the carbon atoms joining them, |
| $R^7$ | is |

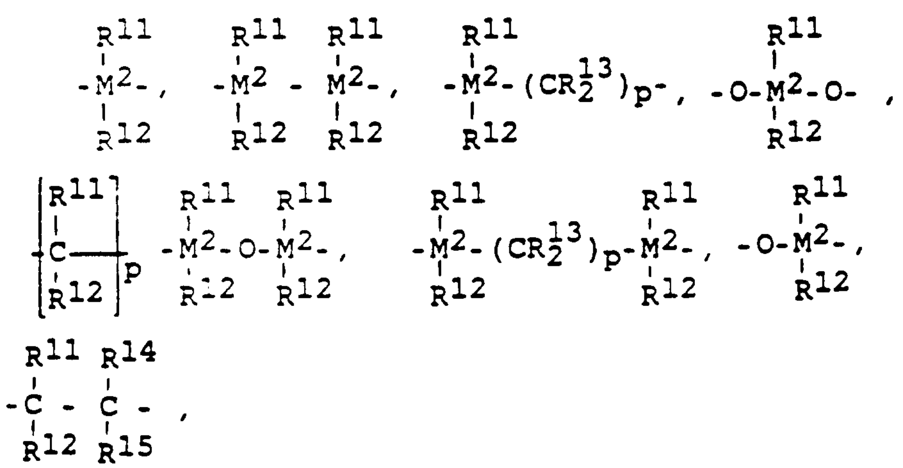

$=BR^{11}$, $=AlR^{11}$, -Ge-, -Sn-, -O-, -S-, $=S=O$, $=SO_2$, $=NR^{11}$, $=CO$, $=PR^{11}$ or $=P(O)R^{11}$, in which

$R^{11}$, $R^{12}$, $R^{13}$, $R^{14}$ and $R^{15}$ are identical or different and are a hydrogen atom, a halogen atom, a $C_1$-$C_{10}$-alkyl group, a $C_1$-$C_{10}$-fluoroalkyl group, a $C_6$-$C_{10}$-aryl group, a $C_6$-$C_{10}$-fluoroaryl group, a $C_1$-$C_{10}$-alkoxy group, a $C_2$-$C_{10}$-alkenyl group, a $C_7$-$C_{40}$-arylalkyl group, a $C_8$-$C_{40}$-arylalkenyl group or a $C_7$-$C_{40}$-alkylaryl group, or $R^{11}$ and $R^{12}$ or $R^{11}$ and $R^{13}$ form a ring, in each case with the atoms joining them,

$M^2$ is silicon, germanium or tin,

p is 1, 2 or 3,

$R^8$ and $R^9$ are identical or different and are a group $=CR^{11}R^{12}$, in which $R^{11}$ and $R^{12}$ have the abovementioned meaning, and

m and n are identical or different and are zero, 1 or 2, m + n being zero, 1 or 2,

and an organoaluminum compound which is an aluminoxane of the formula II

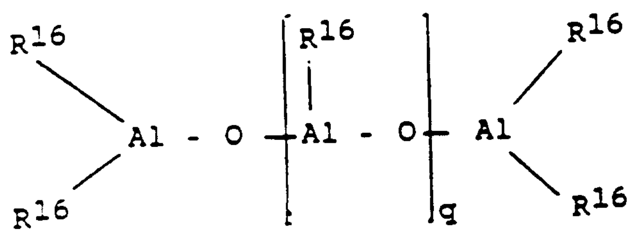

(II)

for the linear type and/or of the formula III

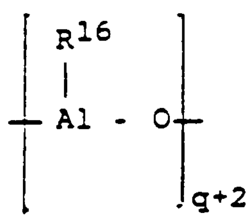

(III)

for the cyclic type, in which $R^{16}$ is a $C_1$-$C_6$-alkyl group and q is an integer from 2 to 50.

2. The process as claimed in claim 1, wherein up to 5 mol % of a 1-olefin having 4 to 10 carbon atoms are additionally employed in the preparation of the polymers (1) and (2).

3. The process as claimed in claim 1 or 2, wherein the monomer of the first stage is removed before the second stage is carried out.

4. The process as claimed in claim 1 or 2, wherein at least an amount of ethylene is passed into the suspension containing the polymer (1) such that the monomer mixture leaves the liquid state of aggregation and passes into a supercritical state.

5. A polypropylene molding composition which can be prepared by the process as claimed in claim 1 or 2.

6. The use of the polypropylene molding composition which can be prepared as claimed in claim 1 or 2 for the production of shaped articles.

## Revendications

1. Procédé de préparation d'une matière à mouler à base de polypropylène, constitué par

   (1) 20 à 99 % en poids d'un polymère isotactique, cristallin, lequel consiste en au moins en 95 % en poids de propylène polymérisé,

   (2) 1 à 80 % en poids d'un copolymère éthylène-propylène non cristallin ayant une teneur en éthylène comprise entre 20 et 90 % en poids,

   procédé au cours duquel on prépare d'abord dans une ou plusieurs étapes le polymère (1) dans du propylène liquide au cours d'une durée de séjour comprise entre 15 et 400 minutes, sous une pression comprise entre 5 et 100 bars et à une température comprise entre 0 et 100 °C et, dans une deuxième étape, le polymère (2) au cours d'une durée de séjour comprise entre 10 et 180 minutes, sous une pression comprise entre 5 et 100 bars et à une température comprise entre 0 et 100 °C en présence d'éthylène en phase gazeuse, en présence d'un catalyseur, lequel consiste en un composé de métal de transition et un composé organique à base d'aluminium, caractérisé en ce que la polymérisation a lieu dans la deuxième étape en phase gazeuse et le composé de métal de transition est un métallocène de formule I :

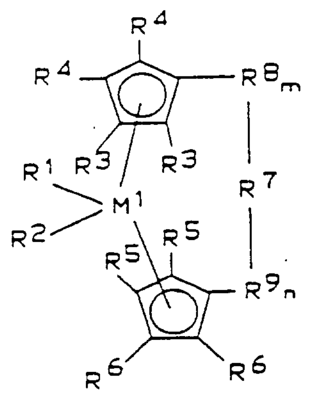

(I)

   dans laquelle

| | |
|---|---|
| $M^1$ | est un métal du groupe IVb, Vb ou VIb du système de Classification Périodique, |
| $R^1$ et $R^2$ | sont identiques ou différents et signifient un atome d'hydrogène, un groupe alkyle en $C_1$-$C_{10}$, un groupe alcoxy en $C_1$-$C_{10}$, un groupe aryle en $C_6$-$C_{10}$, un groupe aryloxy en $C_6$-$C_{10}$, un groupe alcényle en $C_2$-$C_{10}$, un groupe arylalkyle en $C_7$-$C_{40}$, un groupe alkylaryle en $C_7$-$C_{40}$, un groupe arylalcényle en $C_8$-$C_{40}$ ou un atome d'halogène, |
| $R^3$, $R^4$, $R^5$ et $R^6$ | sont identiques ou différents et signifient un atome d'hydrogène, un atome d'halogène, un groupe alkyle en $C_1$-$C_{10}$, un $-NR_2^{10}$, un $-SR^{10}$, un $-OSiR_3^{10}$, un $-SiR_3^{10}$ ou un $-PR_2^{10}$, dans lesquels $R^{10}$ est un atome d'halogène ou un groupe alkyle en $C_1$-$C_{10}$, ou deux des radicaux vicinaux $R^3$, $R^3$, $R^4$, $R^5$ ou $R^6$ forment un cycle avec les atomes de carbone auxquels ils sont liés, |

$R^7$ est

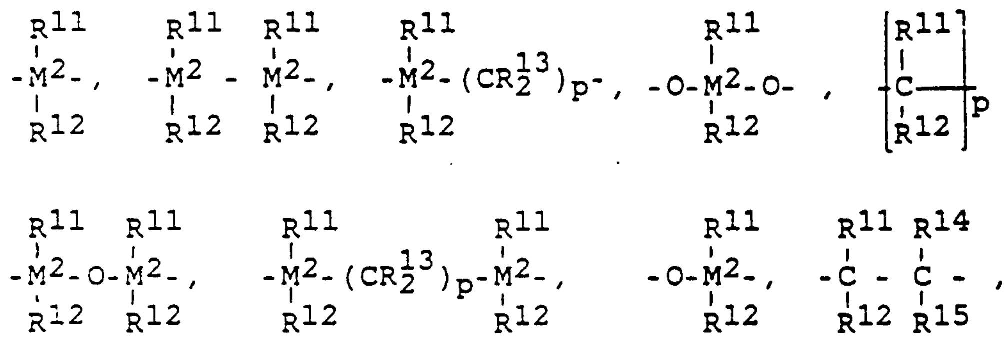

$=BR^{11}$, $=AlR^{11}$, -Ge-, -Sn-, -O-, -S-, $=S=O$, $=SO_2$, $=NR^{11}$, $=CO$, $=PR^{11}$ ou $=P(O)R^{11}$

$R^{11}$, $R^{12}$, $R^{13}$, $R^{14}$ et $R^{15}$ étant identiques ou différents et signifiant un atome d'hydrogène, un atome d'halogène, un groupe alkyle en $C_1$-$C_{10}$, un groupe fluoroalkyle en $C_1$-$C_{10}$, un groupe aryle en $C_6$-$C_{10}$, un groupe fluoroaryle en $C_6$-$C_{10}$, un groupe alcoxy en $C_1$-$C_{10}$, un groupe alcényle en $C_2$-$C_{10}$, un groupe arylalkyle en $C_7$-$C_{40}$, un groupe arylalcényle en $C_8$-$C_{40}$, un groupe alkylaryle en $C_7$-$C_{40}$ ou $R^{11}$ et $R^{12}$ ou $R^{11}$ et $R^{13}$ forment chacun un cycle avec l'atome auquel ils sont liés,

$M^2$ est un silicium, un germanium ou un étain,

p vaut 1, 2 ou 3,

$R^8$ et $R^9$ sont identiques ou différents et signifient un groupe $=CR^{11}R^{12}$, dans lequel $R^{11}$ et $R^{12}$ ont la signification ci-dessus,

et

m et n, identiques ou différents, valent 0, 1 ou 2, m + n valant 0, 1 ou 2,

et un composé organique à base d'aluminium est un aluminoxane de formule II :

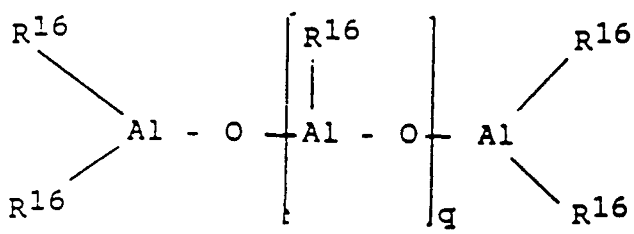

(II)

lorsqu'il est de type linéaire et/ou de formule III :

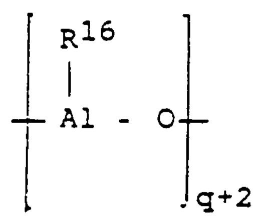

(III),

lorsqu'il est de type cyclique, dans lesquels $R^{16}$ signifie un groupe alkyle en $C_1$-$C_6$, et q un nombre entier allant de 2 à 50.

2. Procédé selon la revendication 1, caractérisé en ce que, lors de la préparation des polymères (1) et (2), on introduit jusqu'à 5 % en moles d'une 1-oléfine supplémentaire ayant de 4 à 10 atomes de carbone.

3. Procédé selon la revendication 1 ou 2, caractérisé en ce que, avant la réalisation de la deuxième étape, on sépare le monomère de la première étape.

4. Procédé selon la revendication 1 ou 2, caractérisé en ce qu'on fait passer de l'éthylène dans la suspension contenant le polymère (1) dans une quantité telle que le mélange de monomères se sépare de l'état d'agrégat liquide et se transforme dans un état surcritique.

5. Matière à mouler à base de polypropylène, que l'on peut obtenir selon le procédé conforme à la revendication 1 ou 2.

6. Utilisation d'une matière à mouler à base de polypropylène que l'on peut obtenir selon la revendication 1 ou 2 en vue de la préparation de pièces moulées.